# EUROPEAN PATENT SPECIFICATION

(11) **EP 2 882 298 B1**
(45) Date of publication and mention of the grant of the patent: **06.07.2016**
(21) Application number: 13748307.9
(22) Date of filing: 12.08.2013
(51) Int. Cl.: A23F 5/40

(54) **METHOD FOR PRODUCING A COFFEE BEVERAGE PRECURSOR**
VERFAHREN ZUR HERSTELLUNG EINES KAFFEEGETRÄNKVORPRODUKTS
PROCÉDÉ DE PRODUCTION D'UN PRÉCURSEUR DE BOISSON DE CAFÉ

(30) Priority: 13.08.2012 WO PCT/CN2012/080010
(43) Date of publication of application: 17.06.2015
(73) Proprietor: Nestec S.A., 1800 Vevey (CH)
(72) Inventor: LUO, Hongliang, Shanghai 201204 (CN); LIAN HWEE PENG, Rebecca, Beijing 101300 (CN); WANG, Yongfu, Shanghai (CN); GU, Xiaolu, Beijing 100016 (CN)
(74) Representative: Krishnan, Sri
(86) International application number: PCT/EP2013/066837
(87) International publication number: WO 2014/026953

(56) References cited:
- EP-A1- 1 000 548
- US-A- 3 653 911
- US-A- 3 706 572
- US-A- 5 620 733

## Description

### Field of the invention

The present invention relates to a method of producing a coffee beverage precursor suitable for preparation of a coffee beverage by dissolution in an aqueous liquid.

### Background

Coffee beverages comprising creamers are widely popular. Such beverages can be prepared from instant coffee beverage powders by dissolution in water. Instant coffee beverage powders for producing coffee beverages with creamer are usually prepared as dry mixes of dehydrated creamer powder and powdered dried coffee extract, and normally accompanied with some sweetener such as sugar. The dehydrated creamer powder and the dried coffee extract powder are produced separately. The powdered dried coffee extract is normally produced by extracting coffee beans with water, concentrating the aqueous coffee extract by evaporation, and finally drying the concentrated coffee extract by spray or freeze drying to produce a powdered dried coffee extract. Dehydrated creamer powder is usually produced by preparing an aqueous emulsion of oil, also containing protein, e.g. milk protein, and other components such as, stabilisers, emulsifiers, glucose syrup or corn syrup, buffer, and the like. These processes have the disadvantage of requiring two separate drying steps, drying of the creamer and drying of the coffee extract. Drying processes such a spray drying or freeze drying are capital intensive and energy intensive processes and may also result in substantial aroma loss. There is a need for improved processes for production of coffee beverage precursors with decreased energy consumption, processing complexity, and improved aroma as well as improved visual appearance.

US Patent 5,620,733 discloses a method in which a mixture of skimmed milk, demineralised whey powder and melted hydrogenated coconut fat is blended with a liquid coffee extract, and the resulting mixture is spray-dried to form an instant coffee powder.

It is the object of the present invention to provide an improved method for producing a coffee beverage precursor, which reduces the need for drying, and/or reduces the energy needed for drying, and/or does not require separate drying of the coffee and creamer components.

### Summary of the invention

The inventors have found that a coffee beverage precursor can be produced by providing an oil-in-water emulsion comprising coffee extract to which a protein ingredient is added. This method allows the water content to be kept relatively low, and thus allows reducing, or avoiding, drying as compared to prior art methods. Accordingly, the invention relates to a method of producing a coffee beverage precursor, the method comprising: a) preparing a liquid oil-in-water emulsion comprising coffee extract; and b) dissolving or suspending a protein ingredient in the emulsion prepared in step a) ; wherein the water content of the emulsion after addition of a protein ingredient in step b) is below 50% by weight.

### Brief description of the figures

Figure 1 shows a granulated coffee beverage precursor according to the invention.

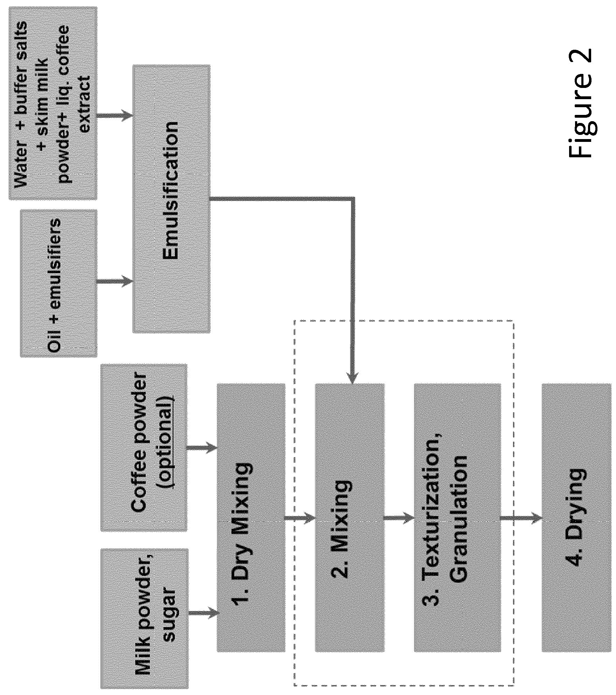

Figure 2 shows a flow diagram of an embodiment of the invention wherein part of the protein ingredients is dissolved or suspended in the water phase of the oil-in-water emulsion prior to emulsification thereof.

### Detailed description of the invention

All amounts herein are given in percent by weight (weight/weight), unless otherwise stated.

By a coffee beverage precursor is meant a product that can be used to prepare a coffee beverage by dissolution in water, or another aqueous liquid, such as e.g. milk. A coffee beverage precursor has a water content which is lower than the water content desired in the final coffee beverage for consumption. It is usually in a substantially solid state, such as e.g. in the form of a powder, granulate, tablet or the like. A coffee beverage precursor in the solid state is usually porous to facilitate easy dissolution. In a preferred embodiment, a coffee beverage precursor of the invention has a water content of less than 10% by weight, preferably less than 6% by weight. A coffee beverage precursor, or coffee beverage granulate, of the invention may be suitable for preparing a coffee beverage by dissolution in a hot and/or cold aqueous liquid.

During conventional production of a coffee beverage precursor for creamer containing coffee beverages, a liquid creamer composition and a liquid coffee extract containing between 20% and 30% water is dried separately, e.g. by spray drying and/or freeze drying. By the method of the invention, an oil-in-water emulsion comprising both creamer components and coffee extract is produced with low water content. This may allow for a single drying step only, or at least reduce the amount of water that needs to be removed during drying, and thus reduce the energy consumption needed. In some embodiments, drying may even be omitted.

It has been found that the use of a method according to the invention provides an encapsulation of the flavours which preserve the aroma compounds. Furthermore, due to drying step which is shorter in time than conventional drying coffee processes allows the freshness of the aroma to be preserved.

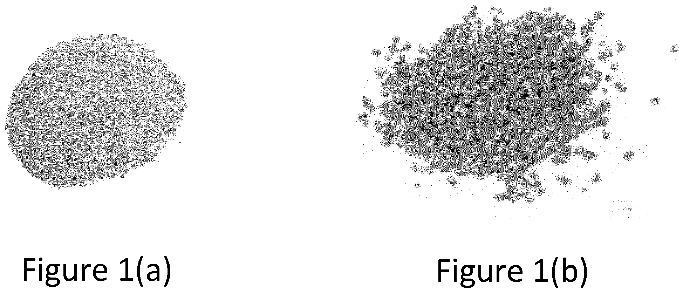

Through the granulation step of the present invention the product obtain an attractive granular appearance and homogenous brownish colour. Figure 1(a) shows a conventional coffee beverage precursor with a dried mixed of spray dried pure soluble coffee, creamer and sugar. Figure 1(b) showns a product produced according to the method according to the invention.

According to the present invention, a coffee beverage precursor is produced by a method comprising preparing a liquid oil-in-water emulsion comprising coffee extract. The oil to be used for preparing the emulsion may be any suitable oil, such as e.g. animal fat such as milk fat (e.g. butter fat) or fish oil, or a vegetable oil. The oil is preferably a vegetable oil, such as e.g. canola oil, soy bean oil, sunflower oil, safflower oil, cotton seed oil, palm oil, palm kernel oil, corn oil, and/or coconut oil. To prepare the liquid oil-in-water emulsion any suitable aqueous liquid may be used. The liquid may comprise coffee extract before the oil is emulsified in the liquid, or the coffee extract maybe added after the emulsification step. In one embodiment, the oil is emulsified in a coffee extract to produce the liquid oil-in-water emulsion comprising coffee extract. In a particular advantageous embodiment the oil added to the oil-in-water emulsion comprises coffee oil. The amount of coffee oil is preferably between from 2 to 7 % by weight of the oil, more preferably around 5 % by weight of the oil. This provides a product with a desirable flavour profile because the coffee flavour compounds present in the oil are preserved by the process of the invention.

A coffee extract to be used in the method of the invention may be any extract of coffee beans which is suitable to achieve the desired characteristics of the final coffee beverage prepared from the coffee beverage precursor of the invention, such as e.g. coffee aroma and taste, and caffeine content. The coffee extract is preferably produced by extraction of coffee beans with water. The coffee beans may be green or roasted coffee beans, and they may be whole or ground. Methods of extracting coffee beans with water to produce a coffee extract suitable for coffee beverage precursors are well known in the art. Roast and ground coffee beans may be stripped of aroma compounds before extraction, methods for aroma stripping are e.g. disclosed in WO 01/13735 and WO 99/52378. The beans may then be extracted with hot water, e.g. in several stages, to produce an aqueous coffee extract. To achieve the desired coffee solids and water content in the oil-in-water emulsion to be granulated, the coffee extract may be concentrated before use in the method of the invention, e.g. by evaporation as is commonly used when producing coffee extracts for production of pure soluble coffee products. The coffee extracts may further be dried, but in a preferred embodiment, liquid coffee extract is used. Examples of suitable processes for production of coffee extracts to be used in the method of the invention are e.g. disclosed in EP 0826308 and EP 0916267. If aroma was stripped from the coffee before extraction, this aroma may be added back to the extract before use, or it may be added to the oil-in-water emulsion at a later stage of the process of the invention. A buffer may be added to the coffee extract to control pH, e.g. to avoid flocculation of other ingredients, such as e.g. milk proteins. Suitable buffers are e.g. monophosphates, diphosphates, sodium mono- and bicarbonates, potassium mono- and bicarbonates, or a combination thereof. Preferred buffers are salts such as potassium phosphate, dipotassium phosphate, potassium hydrophosphate, sodium bicarbonate, sodium citrate, sodium phosphate, disodium phosphate, sodium hydrophosphate, and sodium tripolyphosphate.

The emulsification may be obtained by any suitable method, such as by high shear mixing or homogenisation. Emulsifiers may be used to facilitate the emulsification; suitable emulsifiers are well known by the person skilled in the art and may e.g. be selected among monoglycerides, diglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, diacetylated tartaric acid esters of monoglycerides and diglycerides, succinic acid esters of mono- and diglycerides, lactic acid esters of mono- and diglycerides, lecithins, lysolecitins, and sucrose esters of fatty acids. Proteins may also be used to facilitate the emulsification, e.g. milk proteins such as casein, e.g. in the form of caseinate, whey protein isolate, whey protein concentrate, skim milk powder, full cream powder and or butter milk powder. The amount of oil and aqueous liquid, as well as the amounts of protein ingredient, and optionally additional ingredients that will be added, are selected so that the water content of the oil-in-water emulsion after addition of the protein ingredient is below about 50% by weight, preferably below about 30% by weight, more preferably below about 15% by weight, and even more preferably below about 10% by weight. In one embodiment the water content of the oil-in-water emulsion after addition of the protein ingredient is between about 1% and about 50% by weight.

A protein ingredient is dissolved or suspended in the oil-in-water emulsion prepared in step a). The protein ingredient may provide colour, whiteness, texture, and/or taste to the final coffee beverage prepared from the coffee beverage precursor of the invention. The protein ingredient may be any suitable ingredient containing protein, e.g. a protein ingredient known in the art for use in coffee creamers. The protein ingredient may e.g. comprise milk protein, such as whey protein or casein, e.g. in the form of caseinate; vegetable protein, such as e.g. soy protein, rapeseed, potato, peanut, wheat protein, and/or pea protein; or animal protein. In a preferred embodiment of the invention, the protein ingredient is milk powder, such as e.g. full cream milk powder (FCMP), whole milk powder, skim milk powder, buttermilk powder, and/or combinations thereof. The protein ingredient is dissolved or suspended in the oil-in-water emulsion after the preparation in step a), but it may also be present during the emulsification. If the protein ingredient is added before the emulsification it may be added to the liquid parts, i.e. either the water or the oil parts or both. Alternatively, the protein ingredients may be added both before and after emulsification. A certain water content, which depends e.g. on the ingredients used and the apparatus and conditions for emulsification, is necessary to perform the emulsification. It is advantageous to add the protein ingredients, and other additional ingredients of the final product, after the emulsification. In this way the water content can be kept low, reducing the need for drying of the coffee beverage precursor.

Depending on the desired characteristics of the coffee beverage precursor and the final coffee beverage prepared from it, other ingredients may be added. Any ingredient suitable for obtaining the desired characteristics of the final coffee beverage may be added. Other ingredients may be added at any suitable point in the method, but are preferably added after the emulsification. Other ingredients may e.g. be added before, after or simultaneously with the protein ingredient. In a preferred embodiment a sweetener is added. Any suitable sweetener may be used, e.g. sucrose, fructose, dextrose, maltose, dextrin, levulose, tagatose, galactose, corn syrup solids, and other natural or artificial sweeteners, alone or in combination. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. The amount of sweetener used depends on the desired sweetness of the final beverage and the characteristics of the sweetener used. Other optional ingredients are e.g. aroma compounds, colour compounds, stabilisers, salts, and buffers. Hydrocolloids may be added, e.g. for stabilisation and to ensure desired texture, suitable hydrocolloids are e.g. starch, modified starch, carrageenans, gum Arabica, and carboxymethylcellulose (CMC). Additional coffee solids may also be added, e.g. in the form of a coffee extract in dry or liquid form, to impart additional coffee characteristics to the final product.

The amounts of all ingredients added in the method of producing the coffee beverage precursor must be adjusted so that the desired total composition of the granulated coffee beverage precursor is obtained. In one embodiment of the method of the invention, the oil-in-water emulsion after addition of the protein ingredient comprises between about 3% and about 30% coffee solids by weight of dry solids, such as e.g. between about 3% and about 20% coffee solids by weight of dry solids, or between about 5% and about 15% coffee solids by weight of dry solids. By dry solids is meant all constituents except water. In another embodiment of the method of the invention, the oil-in-water emulsion after addition of the protein ingredient comprises between about 2% and about 40% oil by weight of dry solids, such as e.g. between about 4% and about 30% oil by weight of dry solids, or between about 5% and about 20% oil by weight of dry solids. In a further embodiment of the method of the invention, the oil-in-water emulsion after addition of the protein ingredient comprises between about 1% and about 20% protein by weight of dry solids, such as e.g. between about 2% and about 15% protein by weight of dry solids. The water content of the oil-in-water emulsion after addition of the protein ingredient is preferably between about 0.1% by weight and about 40% by weight, more preferably between about 1% by weight and about 20% by weight, even more preferably between about 2% and about 10% by weight. The oil-in-water emulsion after addition of the protein ingredient may preferably be prepared with the water content desired of the final coffee beverage precursor, so that no drying is needed.

The amounts of all ingredients used for the preparation of the coffee beverage precursor of the invention must be such that the desired water content of the oil-in-water emulsion is achieved after addition of the protein ingredient. Due to the relatively low water content, the oil-in-water emulsion after addition of the protein ingredient will be viscous and may have a paste-like texture and consistency, allowing it to be texturised. By texturised is understood any treatment to add a desired texture or form to the coffee beverage precursor, texturisation may e.g. be granulation or molding. In a preferred embodiment, the emulsion is granulated after the addition of a protein ingredient in step b), to produce a granulated coffee beverage precursor. By granulation is meant the process of processing the oil-in-water emulsion into granules. Granules may have any suitable size, preferably the granules have sizes ranging from about 0.5 mm to 5 mm, preferable from 1.5 to 3.0 mm. Granulation facilities dissolution of the coffee beverage precursor for preparing a coffee beverage, and may also facilitate drying, if needed. Any suitable method may be used. If drying is needed, drying and granulation may be performed in a single process. There are many suitable wet granulation processes, see, for example, Powder Technology Handbook, Editor Lu Shouci. Chemical Industry Press, Beijing, 2004. For example, wet granulation processes include high-speed mixing granulation, extrusion-spheronization granulation, fluidized bed granulation, spray-drying granulation, compound granulation (agitation fluidized bed, rotation fluidized bed, agitation and rotation fluidized bed), and the like. The specific granulation process may be determined according to factors such as the composition and desired characteristics of the coffee beverage precursor, production economy, and physical and chemical properties of the raw materials. High temperatures during granulation are preferably avoided, as high temperatures may affect the aroma and taste of the product unfavourably. In a preferred embodiment, granulation is performed at a temperature below about 100°C, more preferably below about 80°C. The emulsion may also be molded into any desired form after addition of the protein ingredient, or otherwise processed to produce a desired format or texture.

The coffee beverage precursor may be dried after addition of the protein ingredient. If the emulsion is texturised after addition of the protein ingredient, the emulsion may e.g. be dried before, during or after texturisation. If the coffee beverage precursor is granulated, the coffee beverage precursor may be dried after, or during, granulation, if the water content of the granules is higher than desired in the final product. Drying may be performed by any suitable method known in the art, e.g. by fluid-bed drying. The coffee beverage precursor may e.g. be dried to a water content of between about 0.1% and about 10% by weight, such as between about 2% and about 6% by weight.

The water content of the final coffee beverage precursor is preferably between about 0.1 % and about 10% by weight, such as between about 2% and about 6% by weight.

In one embodiment, the present invention is related to a method of producing a granulated coffee beverage precursor, the method comprising: a) preparing a liquid oil-in-water emulsion comprising coffee extract; b) dissolving or suspending a protein ingredient in the emulsion prepared in step a); and c) granulating the emulsion after step b); wherein emulsion being granulated in step c) has a water content of between about 1% by weight and about 30% by weight, a coffee solids content of between about 3% and about 30% coffee solids by weight of dry solids, an oil content of between about 2% and about 40% oil by weight of dry solids, and a protein content of between about 2% and about 15% protein by weight of dry solids; and d) drying the granulated coffee beverage precursor, to produce a granulated coffee beverage precursor with a water content of between about 1% and about 10% by weight.

### EXAMPLES

### Example 1

Granulated coffee beverage precursors where produced by the following method: Oil, skim milk powder, sugar and emulsifiers were mixed together. The resulting mixture was mixed with a liquid coffee extract ("coffee liquor") produced by dissolving dried powdered soluble coffee with water and adding sodium bicarbonate for neutralisation, and an emulsion was created by heavy shear mixing of the final mixture. After emulsification, full cream milk powder (FCMP) and additional sugar was mixed into the emulsion. The final mixture was granulated. The granules were subsequently lightly dried in a Vibrated Fluidized Bed dryer. Coffee beverage precursors with the following compositions were produced:

**Recipe 1**

| | Parts by weight |
|---|---|
| Palm oil olein | 14 |
| Coffee powder | 6 |
| Coffee liquor (powder) | 3.2 |
| Coffee liquor (water) | 3.2 |
| Sodium bicarbonate | 0.5 |
| Emulsifier | 0.6 |
| Sugar | 60 |
| Skim milk powder | 10 |
| Full cream milk powder | 4 |
| Cooked milk flavor | 0.05 |
| Aroma | 1 |
| Total | 102.55 |

**Recipe 2**

| | Parts by weight |
|---|---|
| Palm oil olein | 14 |
| Coffee powder | 6 |
| Coffee liquor (powder) | 3.2 |
| Coffee liquor (water) | 3.2 |
| Sodium bicarbonate | 0.5 |
| Emulsifier | 0.6 |
| Sugar | 60 |
| Skim milk powder | 15 |
| Cooked milk flavor | 0.05 |
| Total | 102.55 |

**Recipe 3**

| | Parts by weight |
|---|---|
| Palm oil olein | 15 |
| Coffee powder | 9 |
| Coffee liquor (powder) | 3.5 |
| Coffee liquor (water) | 3.5 |
| Sodium bicarbonate | 0.5 |
| Emulsifier | 0.5 |
| Sugar | 63.4 |
| Skim milk powder | 5 |
| Full cream milk powder | 4 |
| Cooked milk flavor | |
| Total | 104.4 |

**Recipe 4**

| | Parts by weight |
|---|---|
| Palm oil olein | 12 |
| Coffee powder | 9 |
| Coffee liquor (powder) | 3.5 |
| Coffee liquor (water) | 3.5 |
| Sodium bicarbonate | 0.5 |
| Emulsifier | 0.5 |
| Sugar | 63.4 |
| Skim milk powder | 5 |
| Full cream milk powder | 4 |
| Cooked milk flavor | 0.02 |
| | 101.42 |
| total | 101.42 |

**Recipe 5**

| | Parts by weight |
|---|---|
| Palm oil olein | 14 |
| Coffee powder | 3 |
| Coffee liquor (powder) | 5 |
| Coffee liquor (water) | 5 |
| Sodium bicarbonate | 0.5 |
| Emulsifier | 0.6 |
| Sugar | 60 |
| Skim milk powder | 8 |
| Cooked milk flavor | 0.05 |
| Total | 101.15 |

**Recipe 6**

| | Parts by weight |
|---|---|
| Palm oil olein | 18 |
| Coffee powder | 6 |
| Coffee liquor (powder) | 5.5 |
| Coffee liquor (water) | 5.5 |
| Sodium bicarbonate | 0.5 |
| Emulsifier | 0.6 |
| Sugar | 50 |
| Skim milk powder | 10 |
| Full cream milk powder | 4 |
| Cooked milk flavor | 0.05 |
| Aroma | 1 |
| Total | 101.15 |

The granulated coffee beverage precursors were dissolved in hot water to produce milky coffee beverages with good aroma, taste and texture.

### Example 2

A coffee beverage precursor was produced by the following method:
Oil and emulsifiers were mixed at 60-70°C (mix A). Sodium caseinate and water was mixed and heated to 50°C (mix B). Mix A and mix B were combined, mixed and homogenised to produce an oil-in-water emulsion. A liquid coffee extract was prepared by mixing water and dried powdered soluble coffee, and neutralising the mixture with sodium citrate and sodium bicarbonate (mix C). Mix C was mixed with the water emulsion produced from mix A and mix B. Sugar, sweetener, full cream milk powder (FCMP), starch, maltodextrine, CMC, flavour, NaCl and additional dried powdered soluble coffee (mix D), was mixed into the combined mixture of mix A, B, and C. The total composition was granulated and subsequently lightly dried in a Vibrated Fluidized Bed dryer.

The granulated coffee beverage precursor was dissolved in hot water to produce milky coffee beverages with good aroma, taste and texture.

### Example 3 (not according to the invention):

A coffee beverage precursor was produced by the following method using recipe 7:

**Recipe 7**

| | Parts by weight |
|---|---|
| Palm oil olein | 8.80 |
| Coffee powder | 13.00 |
| Buffer salt | 0.20 |
| Starch | 10.00 |
| Sugar | 57.00 |
| Skim milk powder | 3.00 |
| Water | 8.00 |
| Total | 100.00 |

The oil-in-water emulsion was made as follows: Skim milk powder was dissolve in water at 50°C. A buffer salt and sugar where then dispersed at 50°C (Water Phase). Liquid oil was then incorporated to the water phase and the mix was homogenized using high pressure homogenizer to produce an oil-in-water emulsion. Coffee powder and starch were added to make a wet mix with a final moisture of 8%. The final mix was then granulated using a twin roll granulator. Homogenous granules were produced and post dried below 4% moisture using a fluidized bed dryer.

The granulated coffee beverage precursor was dissolved in hot water to produce milky coffee beverages with good aroma, taste and texture.

## Claims

1. A method of producing a coffee beverage precursor, the method comprising:
a) preparing a liquid oil-in-water emulsion comprising coffee extract; and
b) dissolving or suspending a protein ingredient in the emulsion prepared in step a); wherein the water content of the emulsion after addition of a protein ingredient in step b) is below 50% by weight.

2. The method of claim 1 further comprising granulating the emulsion after the addition of a protein ingredient in step b), to produce a granulated coffee beverage precursor.

3. The method of any one of claims 1 and 2, further comprising drying the coffee beverage precursor, to produce a dried coffee beverage precursor.

4. The method of claim 3, wherein the granulated coffee beverage precursor is dried to a water content of between about 0.1% and about 10% by weight.

5. The method of any one of the preceding claims, further comprising dissolving a sweetener in the emulsion before, during, and/or after step b).

6. The method of any one of the preceding claims, wherein the protein ingredient is in powdered form.

7. The method of any one of the preceding claims, wherein the protein ingredient comprises milk protein, soy protein, wheat protein, and/or pea protein.

8. The method of any one of the preceding claims, wherein the protein ingredient comprises milk powder.

9. The method of any one of the preceding claims, wherein water content of the emulsion after addition of a protein ingredient in step b) is below 20% by weight.

10. The method of any one of the preceding claims, wherein the oil-in-water emulsion after addition of a protein ingredient in step b) comprises between about 3% and about 30% coffee solids by weight of dry solids.

11. The method of any one of the preceding claims, wherein the oil-in-water emulsion after addition of a protein ingredient in step b) comprises between about 2% and about 40% oil by weight of dry solids.

12. The method of any one of the preceding claims, wherein the oil-in-water emulsion after addition of a protein ingredient in step b) comprises between about 1% and about 20% protein by weight of dry solids.

13. The method of any one of the preceding claims, wherein the oil of the oil-in-water emulsion is selected among milk fat, canola oil, soy bean oil, sunflower oil, safflower oil, cotton seed oil, palm oil, palm kernel oil, corn oil, and/or coconut oil, or a mixture thereof.

14. The method of any of the preceding claims, wherein the oil of the oil-in-water emulsion comprises coffee oil.

## Patentansprüche

1. Verfahren zum Herstellen eines Kaffeegetränkvorprodukts, wobei das Verfahren Folgendes umfasst:
a) Zubereiten einer flüssigen Öl-in-Wasser-Emulsion, die Kaffeeextrakt umfasst; und
b) Auflösen oder Suspendieren einer Proteinzutat in der in Schritt a) zubereiteten Emulsion;
wobei der Wassergehalt der Emulsion nach dem Hinzufügen einer Proteinzutat in Schritt b) unter 50 Gew.-% liegt.

2. Verfahren nach Anspruch 1, ferner umfassend das Granulieren der Emulsion nach dem Hinzufügen einer Proteinzutat in Schritt b), um ein granuliertes Kaffeegetränkvorprodukt herzustellen.

3. Verfahren nach einem der Ansprüche 1 und 2, ferner umfassend das Trocknen des Kaffeegetränkvorprodukts, um ein getrocknetes Kaffeegetränkvorprodukt herzustellen.

4. Verfahren nach Anspruch 3, wobei das granulierte Kaffeegetränkvorprodukt auf einen Wassergehalt zwischen etwa 0,1 und etwa 10 Gew.-% getrocknet wird.

5. Verfahren nach einem der vorstehenden Ansprüche, ferner umfassend das Auflösen eines Süßungsmittels in der Emulsion vor, während und/oder nach Schritt b).

6. Verfahren nach einem der vorstehenden Ansprüche, wobei die Proteinzutat in Pulverform vorliegt.

7. Verfahren nach einem der vorstehenden Ansprüche, wobei die Proteinzutat Milchprotein, Sojaprotein, Weizenprotein und/oder Erbsenprotein umfasst.

8. Verfahren nach einem der vorstehenden Ansprüche, wobei die Proteinzutat Milchpulver umfasst.

9. Verfahren nach einem der vorstehenden Ansprüche, wobei der Wassergehalt der Emulsion nach dem Hinzufügen einer Proteinzutat in Schritt b) unter 20 Gew.-% liegt.

10. Verfahren nach einem der vorstehenden Ansprüche, wobei die Öl-in-Wasser-Emulsion nach dem Hinzufügen einer Proteinzutat in Schritt b) zwischen etwa 3 % und etwa 30 % Kaffeefeststoffe bezogen auf das Gewicht von trockenen Feststoffen umfasst.

11. Verfahren nach einem der vorstehenden Ansprüche, wobei die Öl-in-Wasser-Emulsion nach dem Hinzufügen einer Proteinzutat in Schritt b) zwischen etwa 2 % und etwa 40 % Öl bezogen auf das Gewicht von trockenen Feststoffen umfasst.

12. Verfahren nach einem der vorstehenden Ansprüche, wobei die Öl-in-Wasser-Emulsion nach dem Hinzufügen einer Proteinzutat in Schritt b) zwischen etwa 1 % und etwa 20 % Protein bezogen auf das Gewicht von trockenen Feststoffen umfasst.

13. Verfahren nach einem der vorstehenden Ansprüche, wobei das Öl der Ölin-Wasser-Emulsion ausgewählt ist aus Milchfett, Rapsöl, Sojabohnenöl, Sonnenblumenöl, Distelöl, Baumwollsamenöl, Palmöl, Palmkernöl, Maiskeimöl und/oder Kokosöl oder einer Mischung davon.

14. Verfahren nach einem der vorstehenden Ansprüche, wobei das Öl der Ölin-Wasser-Emulsion Kaffeeöl umfasst.

## Revendications

1. Procédé de production d'un précurseur de boisson au café, le procédé comprenant :
a) la préparation d'une émulsion liquide huile-dans-eau comprenant de l'extrait de café ; et
b) la dissolution ou la suspension d'un ingrédient de protéine dans l'émulsion préparée dans l'étape a) ;
dans lequel la teneur en eau de l'émulsion après ajout d'un ingrédient de protéine dans l'étape b) est inférieure à 50 % en poids.

2. Procédé selon la revendication 1, comprenant en outre la granulation de l'émulsion après l'ajout d'un ingrédient de protéine dans l'étape b), afin de produire un précurseur de boisson au café granulé.

3. Procédé selon l'une quelconque des revendications 1 et 2, comprenant en outre le séchage du précurseur de boisson au café, afin de produire un précurseur de boisson au café séché.

4. Procédé selon la revendication 3, dans lequel le précurseur de boisson au café granulé est séché jusqu'à une teneur en eau comprise entre environ 0,1 % et environ 10 % en poids.

5. Procédé selon l'une quelconque des revendications précédentes, comprenant en outre la dissolution d'un édulcorant dans l'émulsion avant, pendant et/ou après l'étape b).

6. Procédé selon l'une quelconque des revendications précédentes, dans lequel l'ingrédient de protéine est sous forme de poudre.

7. Procédé selon l'une quelconque des revendications précédentes, dans lequel l'ingrédient de protéine comprend de la protéine de lait, de la protéine de soja, de la protéine de blé et/ou de la protéine de pois.

8. Procédé selon l'une quelconque des revendications précédentes, dans lequel l'ingrédient de protéine comprend du lait en poudre.

9. Procédé selon l'une quelconque des revendications précédentes, dans lequel la teneur en eau de l'émulsion après ajout d'un ingrédient de protéine dans l'étape b) est inférieure à 20 % en poids.

10. Procédé selon l'une quelconque des revendications précédentes, dans lequel l'émulsion huile-dans-eau, après l'ajout d'un ingrédient de protéine dans l'étape b), comprend entre environ 3 % et environ 30 % de solides de café en poids de matières solides sèches.

11. Procédé selon l'une quelconque des revendications précédentes, dans lequel l'émulsion huile-dans-eau, après l'ajout d'un ingrédient de protéine dans l'étape b), comprend entre environ 2 % et environ 40 % d'huile en poids de matières solides sèches.

12. Procédé selon l'une quelconque des revendications précédentes, dans lequel l'émulsion huile-dans-eau, après l'ajout d'un ingrédient de protéine dans l'étape b), comprend entre environ 1 % et environ 20 % de protéine en poids de matières solides sèches.

13. Procédé selon l'une quelconque des revendications précédentes, dans lequel l'huile de l'émulsion huile dans l'eau est sélectionnée parmi la matière grasse de lait, l'huile de canola, l'huile de fève de soja, l'huile de tournesol, l'huile de carthame, l'huile de graine de coton, l'huile de palme, l'huile de palmiste, l'huile de maïs et/ou l'huile de noix de coco, ou un de leurs mélanges.

14. Procédé selon l'une quelconque des revendications précédentes, dans lequel l'huile dans l'émulsion huile-dans-eau comprend de l'huile de café.
